# EUROPÄISCHE PATENTSCHRIFT

(11) **EP 2 065 690 B1**
(45) Veröffentlichungstag und Bekanntmachung des Hinweises auf die Patenterteilung: **20.10.2010**
(21) Anmeldenummer: 07022965.3
(22) Anmeldetag: 27.11.2007
(51) Int. Cl.: G01J 5/08, G01J 5/48, G01K 13/08, H02K 11/00

(54) **Dynamoelektrische Maschine mit einem Temperaturerfassungsmesssystem**
Dynamo-electric machine with a temperature gauge
Machine dynamoélectrique dotée d'un système d'enregistrement de la température

(43) Veröffentlichungstag der Anmeldung: 03.06.2009
(73) Patentinhaber: SIEMENS AKTIENGESELLSCHAFT, 80333 München (DE)
(72) Erfinder: Knauff, Axel, 97702 Münnerstadt (DE)

(56) Entgegenhaltungen:
- DE-A1- 4 309 018
- JP-A- 2 276 930
- JP-A- 2004 116 316
- US-A1- 2003 120 415

## Beschreibung

Die Erfindung betrifft eine dynamoelektrische Maschine mit einem Stator und einem Rotor, der mit einer Welle drehfest verbunden ist, wobei sich über Sensoren die Temperatur des Rotors erfasst wird.

Bei dynamoelektrischen Maschinen, die an ihrer Leistungsgrenze betrieben werden, ist die Temperatur der rotierenden Teile ein äußerst kritischer Parameter. Die maximal zulässige Temperatur bestimmt die Leistungsfähigkeit der dynamoelektrischen Maschine. Die Überschreitung der zulässigen Temperatur kann neben der Reduktion der abgegebenen Leistung auch zu einer Zerstörung der dynamoelektrischen Maschine führen. Aus diesem Grund kann auf eine Überwachung der Temperatur in hoch ausgenutzten dynamoelektrischen Maschinen nicht verzichtet werden.

Die rotierenden Teile einer dynamoelektrischen Maschine können sich entlang ihres Umfangs als auch an ihrer axialen Ausdehnung unterschiedlich erwärmen. Dies betrifft sowohl dynamoelektrische Maschine in Asynchrontechnik als auch Synchrontechnik.

Bisher wurde bei hoch ausgenutzten dynamoelektrischen Maschinen über in den Wickelkopf eingebrachte Temperaturfühler die Temperatur erfasst. Diese Methode hat zwei entscheidende Nachteile, zum Einen kann die Temperatur der rotierenden Teile nicht direkt erfasst werden und zum Andern weist der Temperaturfühler eine gewisse Masse auf, die somit mit einer thermischen Zeitkonstante einhergeht, die wiederum bewirkt, dass der aufgenommene Messwert dem realen Temperaturwert der Wicklung "hinterher läuft".

Dies führt im Extremfall, beispielsweise bei einem sehr dynamischen Betrieb der dynamoelektrischen Maschine dazu, dass die rotierenden Komponenten durch Überhitzung geschädigt werden. Aus diesem Grund werden die Warntemperaturen in den Steuerungen der dynamoelektrischen Maschine in der Regel 10% niedriger als notwendig angesetzt, wodurch natürlich die dynamoelektrische Maschine nicht optimal bis an ihre Leistungsgrenze ausgenutzt werden kann. Die Temperatur überwachung über Infrarotsensoren ist Gegenstand des Dokuments JP 2004116316.

Der Erfindung liegt nunmehr die Aufgabe zugrunde, eine dynamoelektrische Maschine zu schaffen, die eine Auswerteeinrichtung aufweist mit der ein positions- und temperaturgenaues Wärmeabbild, insbesondere der rotierenden Teile der dynamoelektrischen Maschine erzeugt werden kann, so dass die Ausnutzung dieser dynamoelektrischen Maschine gegenüber den bekannten der dynamoelektrischen Maschine gesteigert werden kann.

Die Lösung der gestellten Aufgabe gelingt durch eine dynamoelektrische Maschine mit berührungslosen Temperatursensoren nach Anspruch 1 und einem Verfahren zur Erzeugung eines positionsgenauen Temperaturabbildes des Rotors einer dynamoelektrischen Maschine nach Anspruch 7. Vorteilhafte Ausgestaltungen sind Gegenstand der auf diese rückbezogenen Unteransprüche.

In dem nunmehr erfindungsgemäß die Temperatur des Rotors mit einem berührungslosen Sensor erfasst wird, und gleichzeitig die Lage des Rotors über den Rotorlagegeber erfasst wird, ist eine positionsgenaue Bestimmung der Temperatur des Rotors jederzeit klar und eindeutig durchführbar. Die Temperatur der rotierenden Teile ist proportional der von ihr imitierten Infrarotstrahlung, die somit verzögerungsfrei von einem berührungslos erfassenden Sensor, insbesondere einem Infrarotsensor aufgenommen wird und an die Verarbeitungseinheit weitergeleitet wird.

Beispielsweise werden Temperaturen der in oder auf dem Rotor angeordneten Permanentmagneten überwacht, da bei zu hoher Temperatur eine Entmagnetisierung dieser Permanentmagnete eintritt.

Vorteilhafterweise wird durch eine Anordnung derartiger Sensoren über die axiale Länge des Rotors, insbesondere am Stator auch der axiale Verlauf der Temperatur des Rotors überwacht. Somit wird der Rotor sowohl an den Stirnseiten als auch über seine Oberfläche durch Temperatursensoren überwacht, die ihre Daten an die Verarbeitungseinheit weiterleiten und somit mit den Daten des jeweiligen Rotorlagegebers ein punktgenaues Bestimmen der Oberflächentemperatur des Rotors festzustellen ist. Vorteilhafterweise werden als Sensoren sowohl an der Stirnseite als auch am Stator auf der dem Luftspalt zugewandten Seite Infrarotsensoren zur berührungslosen Temperaturerfassung angezogen.

In einer weiteren Ausführungsform sind an der Stirnseite mehrere Sensoren radial untereinander angebracht, um so verschiedene Radien des Rotors zu überwachen und die dort vorhandenen Temperaturen erfassen zu können.

Ebenso kann insbesondere dort auch die Verwendung von Zeilensensoren äußerst sinnvoll sein.

Die Erfindung sowie weitere vorteilhafte Ausgestaltungen der Erfindung sind anhand der schematisch dargestellten Ausführungsbeispiele zu entnehmen; darin zeigen:
- FIG 1: einen Teillängsschnitt einer elektrischen Maschine,
- FIG 2: eine Sicht auf den Stator,
- FIG 3: eine Sicht auf den Rotor,
- FIG 4: eine Seitenansicht auf den Rotor,
- FIG 5: eine prinzipielle Verfahrensweise,
- FIG 6: ein Temperaturprofil.

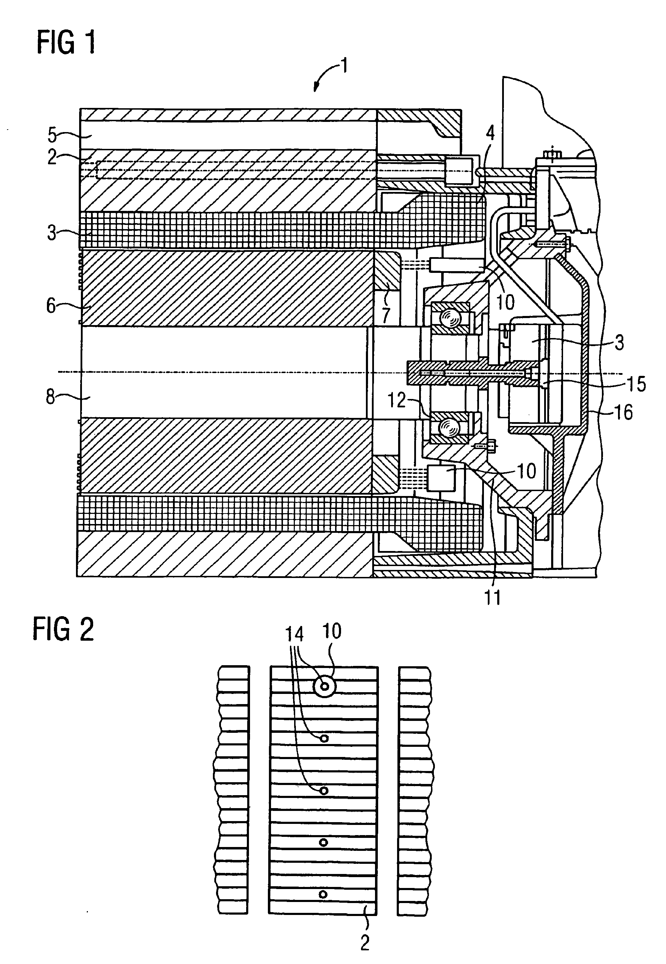

FIG 1 zeigt in einem Teillängsschnitt einer dynamoelektrischen Maschine 1 mit einem Stator 2, der in nicht näher dargestellten Nuten eine Wicklung 3 aufweist, die an den Stirnseiten des Stators 2 Wickelköpfe 4 ausbildet. Der Stator 2 ist auf der dem Luftspalt abgewandten Seite u.a. zur Kühlung des Blechpakets des Stators 2 mit zumindest einem Kühlkanal 5 versehen, der Teil eines Kühlkreislaufs bildet. Das Kühlmittel des Kühlkreislaufs ist dabei Luft oder eine Flüssigkeit, insbesondere Wasser.

Ein Rotor 6 ist mit einer Welle 8 drehfest verbunden, beispielsweise aufgeschrumpft. In diesem Ausführungsbeispiel ist der Rotor 6 als Kurzschlussläufer einer Asynchronmaschine ausgebildet und weist daher auch an der Stirnseite des Rotors 6 einen Kurzschlussring 7 auf.

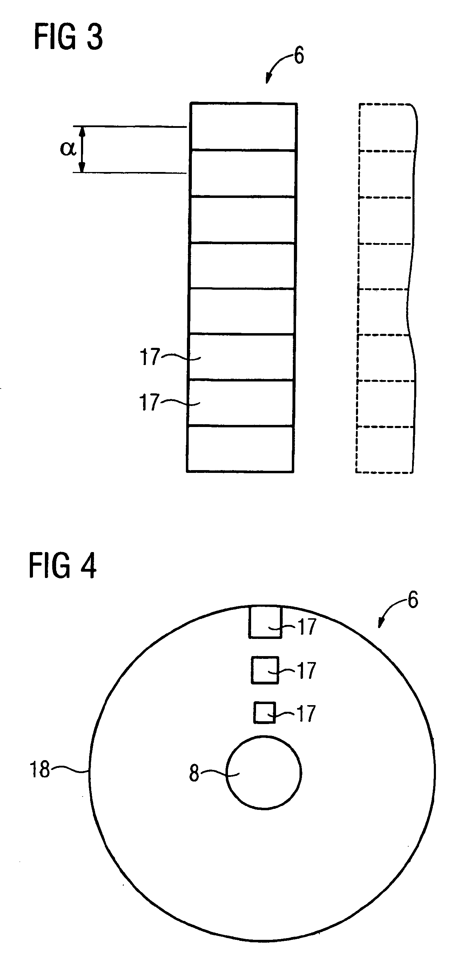

In anderen Ausführungsformen der Erfindung kann der Rotor wie in FIG 3 und FIG 4 angedeutet, auch mit Permanentmagneten versehen sein und somit eine permanenterregte Synchronmaschine ausbilden.

Die Erfindung ist somit für jeden rotatorischen Motortyp geeignet.

An einer Stirnseite der Welle 8 befindet sich ein Rotorlagegeber 9, der beispielsweise über eine elektrisch nichtleitende Schraube 15 mit der Welle 8 drehfest verbunden ist. Über diesen Rotorlagegeber 9, insbesondere einen Resolver wird die exakte Winkellage und Position des Rotors 6 als Absolutwert bestimmt.

Die Welle 8 ist zumindest auf dieser Seite durch ein Lager 12, das durch ein Lagerschild 11 gehalten ist, fixiert. Insbesondere am Lagerschild 11 oder im Bereich des Lagerschildes 11 sind nunmehr Temperatursensoren 10 angeordnet, die die Temperatur auf der Stirnseite des Rotors 6, sei es in diesem Fall der Kurzschlussring oder in einem anderen Ausführungsbeispiel die jeweiligen Permanentmagnete 17, insbesondere berührungslos erfassen. Diese Temperatursensoren 10 sind insbesondere als Infrarotsensoren ausgebildet, so dass auch kein zeitlicher Verzug zwischen aktueller Temperatur und der Erfassung dieser Temperatur auftritt. Eine Weiterleitung dieser Temperaturwerte an eine Verarbeitungseinheit 13 und damit eine Auswertung ist damit unverzüglich möglich.

Um auch radial weiter innen liegende Bereiche der Rotoren 6 zu erfassen, kann anstatt eines punktuellen Infrarotsensors auch ein Zeilensensor verwendet werden, der wie in FIG 4 dargestellt einen vorgebbaren radialen Abschnitt des Rotors 6 erfasst.

Um auch den axialen Temperaturverlauf des Rotors 6 exakt zu erfassen, ist in einer weiteren Ausführungsform der Stator 2 im Bereich seines Luftspaltes mit mehreren axial hintereinander angeordneten Temperatursensoren 10 gemäß FIG 2 versehen. Die prinzipielle Darstellung zeigt die Sicht aus der Statorbohrung auf das Blechpaket des Stators 2.

Diese Temperatursensoren 10 erfassen die abgestrahlte Infrarotstrahlung und damit die Temperatur an der Oberfläche des Rotors 6, wo beispielsweise die Permanentmagnete unter einer Bandage 17 oder ein Kurzschlusskäfig in der Nut des Rotors angeordnet ist.

FIG 2 zeigt beispielhaft, dass jedes vierte Blech des Stators 2 auf der dem Luftspalt der dynamoelektrischen Maschine zugewandten Seite Temperatursensoren 10 aufweist. Dabei weist beispielsweise zumindest ein Blech einen radial verlaufenden Kanal nach außen oder zumindest bis zum Kühlkanal auf, um den Temperatursensor 10 an eine Verarbeitungseinheit anzuschließen.

Zusammen mit der Information des Rotorlagegebers 9 kann nunmehr punktgenau festgestellt werden, welche Temperatur der Rotor 6 sowohl an der oder den Stirnseiten als auch längs seines axialen Verlaufs aufweist.

FIG 3 zeigt dies insbesondere an einem prinzipiellen Ausschnitt eines Rotors 6, der mit axial hintereinander angeordneten Permanentmagneten versehen ist. Der Abstand der Permanentmagnete A ist dabei vorteilhafterweise auch der Abstand der Temperatursensoren 10 am Stator 2 gemäß FIG 2.

Um auch bei vergrabenen Permanentmagneten 17 eine Temperatur zu erfassen, sind Zeilenschreiber gegenüber der Stirnseite des Rotors 6 angeordnet, die sowohl die radial äußeren als auch radial weiter innen liegende Bereiche des Rotors 6 insbesondere Permanentmagnete 17 erfassen.

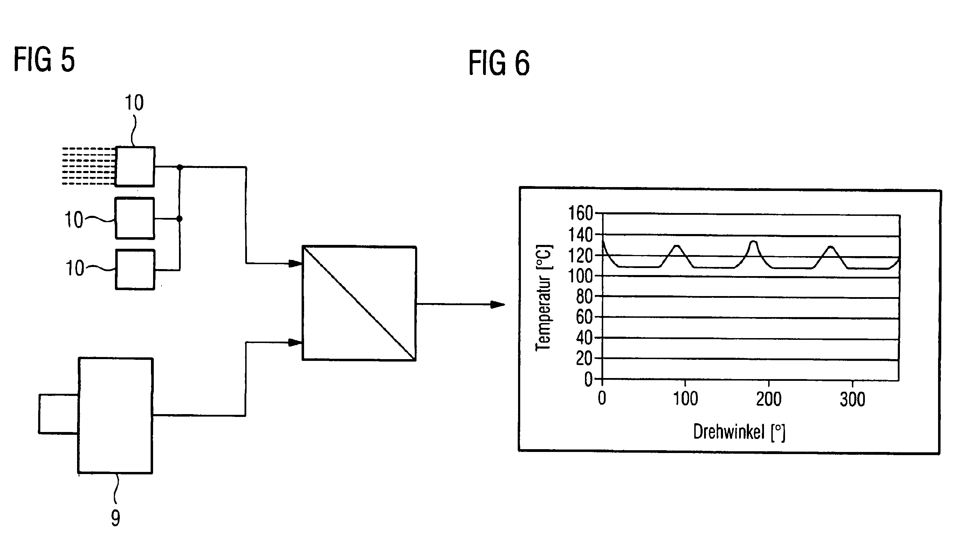

FIG 5 zeigt in einer prinzipiellen Darstellung die Informationsverarbeitung der diesem erfindungsgemäßen System insbesondere der dynamoelektrische Maschine zugrunde liegenden Temperaturerfassung. Über die Temperatursensoren 10, insbesondere Infrarotsensoren werden vorteilhafterweise an den Stirnseiten der Rotoren 6 und/oder über den axialen Verlauf des Stators 2 die Temperatur des Rotors 6 oder auf dem Rotor 6 befindlicher Komponenten wie Permanentmagnete 17 oder Kurzschlusskäfig 7 erfasst. Die Daten werden einzeln oder über eine gemeinsame Datenleitung, insbesondere ein Bussystem an eine Verarbeitungseinheit 13 weitergegeben. In diese Verarbeitungseinheit 13 legt der Rotorlagegeber 9 auch jeweils den Drehwinkel des Rotors 6 ab. Damit lässt sich zumindest an den oder der Stirnseite des Rotors 6 eine Temperaturverteilung gemäß FIG 6 feststellen, die in Abhängigkeit eines Drehwinkels genau angibt, wo Temperaturmaxima eventuell kritischer Natur vorhanden sind.

Falls die Temperatursensoren 10 auch über die axiale Länge des Stators 2 verteilt sind, muss die Information gemäß dem vorigen Ausführungsbeispiel nicht nur bezüglich des Umfangs und des Drehwinkels ermittelt werden, sondern gleichzeitig auch bezüglich der axialen Position des Temperatursensors 10 über die axialen Länge des Stators 2.

Damit würde sich in Anlehnung an FIG 6 ein 3-D-Diagramm ergeben, das neben der Information der Temperatur über den Drehwinkel und in einer dritten Dimension weitere Temperaturverläufe in Abhängigkeit von der axialen Beabstandung von einer Stirnseite des Rotors 6 aus angibt.

Um ein komplettes thermisches Abbild der dynamoelektrischen Maschine zu erhalten, sind ergänzend auch Temperatursensoren 10 beispielsweise an den stationären Teilen wie Wickelkopf, Blechpaket des Stators 2 und Lager 12 vorzusehen.

## Patentansprüche

1. Dynamoelektrische Maschine (1) mit einem Stator (2) und einem Rotor (6), der mit einer Welle (8) drehfest verbunden ist, wobei sich an einem Wellenende ein Rotorlagegeber(9) befindet und wobei berührungslose Sensoren (10) um den Rotor (6) angeordnet sind, die die Temperatur der Oberfläche des Rotors (6) erfassen und zusammen mit dem Rotorlagegeber (9) mit Hilfe einer Verarbeitungseinheit (13) ein positionsgenaues Temperaturabbild des Rotors (6) erzeugen, wobei die Temperatursensoren (10) an den Stirnseiten des Rotors (6) und/oder über den axialen Verlauf des Stators (2) die Temperatur des Rotors (6) oder der auf dem Rotor (6) befindlichen Komponenten, wie Permanentmagnete und Kurzschlusskäfig erfasst.

2. Dynamoelektrische Maschine (1) nach Anspruch 1, **dadurch gekennzeichnet, dass** die Sensoren (10) gegenüber der Stirnseite des Rotors (6) und/oder am Stator (2) angeordnet sind.

3. Dynamoelektrische Maschine (1) nach Anspruch 2, **dadurch gekennzeichnet, dass** die Sensoren (10) am Stator (2) zumindest an einer axial verlaufenden zum Luftspalt gewandten Zahnreihe angeordnet sind.

4. Dynamoelektrische Maschine (1) nach Anspruch 2 oder 3, **dadurch gekennzeichnet, dass** die Sensoren (10) gegenüber den Stirnseiten des Rotors (6), insbesondere als Zeilensensoren ausgebildet sind.

5. Dynamoelektrische Maschine (1) nach einem der vorhergehenden Ansprüche, **dadurch gekennzeichnet, dass** die Temperatur der Oberfläche des Rotors (6) durch ein Infrarotmesssystem erfasst wird.

6. Dynamoelektrische Maschine (1) nach einem der vorhergehenden Ansprüche, **dadurch gekennzeichnet, dass** die Daten der Sensoren (10) an eine Verarbeitungseinheit (13) weiter geleitet werden und zusammen mit dem Rotorlagegeber (9) ein positionsgenaues Temperaturabbild des Rotors (6) erzeugen, so dass abhängig davon ein Lüfter angesteuert wird und/oder eine Meldung abgesetzt wird und/oder eine Abschaltung der Maschine eingeleitet wird.

7. Verfahren zur Erzeugung eines positionsgenauen Temperaturabbildes des Rotors (6) einer dynamoelektrischen Maschine (1) durch folgende Schritte:
- Bereitstellen eines Stators (2),
- Bereitstellen einer Welle (8), die mit dem Rotor (6) drehfest verbunden ist,
- Anordnen eines Rotorlagegebers (9) an einem Wellenende,
- Anordnen berührungsloser Temperatursensoren (10) um den Rotor (6),
- Erfassen der Temperatur an der Stirnseite des Rotors (6) und/oder am axialen Verlauf einer zum Luftspalt gewandten Zahnreihe des Stators (2),
- Erfassung der Rotorlage durch den Rotorlagegeber (9),
- Zusammenführen der Daten an eine Verarbeitungseinheit (13), die ein positionsgenaues Temperaturabbild des Rotors (6) erzeugt, das die Basis für Entscheidungen der Ansteuereinheit bildet, ob beispielsweise eine Meldung abgesetzt und/oder eine Abschaltung der Maschine herbei geführt wird.

## Claims

1. Dynamoelectrical machine (1) having a stator (2) and a rotor (6) which is connected to a shaft (8) such that they rotate together, with a rotor position transmitter (9) being located at one shaft end and with non-contacting sensors (10) being arranged around the rotor (6), which detect the temperature of the surface of the rotor (6) and, together with the rotor position transmitter (9) by means of a processing unit (13), produce an accurate-position temperature map of the rotor (6) the temperature of the rotor (6) or of the components located on the rotor (6), such as permanent magnets and the squirrel cage, being detected by the temperature sensors (10) on the end faces of the rotor (6) and/or over the axial profile of the stator (2).

2. Dynamoelectrical machine (1) according to Claim 1, **characterized in that** the sensors (10) are arranged opposite the end face of the rotor (6) and/or on the stator (2).

3. Dynamoelectrical machine (1) according to Claim 2, **characterized in that** the sensors (10) on the stator (2) are arranged at least on one axially running row of teeth facing the air gap.

4. Dynamoelectrical machine (1) according to Claim 2 or 3, **characterized in that** the sensors (10) opposite the end faces of the rotor (6) are, in particular, in the form of row sensors.

5. Dynamoelectrical machine (1) according to one of the preceding claims, **characterized in that** the temperature of the surface of the rotor (6) is detected by means of an infrared measurement system.

6. Dynamoelectrical machine (1) according to one of the preceding claims, **characterized in that** the data from the sensors (10) is passed on to a processing unit (13) and, together with the rotor position transmitter (9), produces an accurate-position temperature map of the rotor (6) such that a fan is driven as a function of this and/or a message is sent and/or disconnection of the machine is initiated.

7. Method for producing an accurate-position temperature map of the rotor (6) of a dynamoelectrical machine, by means of the following steps:
- provision of a stator (2),
- provision of a shaft (8) connected to the rotor (6) such that they rotate together,
- arrangement of a rotor position transmitter (9) at one shaft end,
- arrangement of non-contacting sensors (10) around the rotor (6),
- detection of the temperature on the end face of the rotor (6) and/or on the axial profile of a row of teeth, facing the air gap, of the stator (2),
- detection of the rotor position by means of the rotor position transmitter (9),
- culmination of the data at a processing unit (13) which produces an accurate-position temperature map of the rotor (6), which forms the basis for decisions by the drive unit as to whether, for example, a message is sent and/or the disconnection of the machine is initiated.

## Revendications

1. Machine ( 1 ) dynamoélectrique comprenant un stator ( 2 ) et un rotor ( 6 ) qui est solidaire en rotation d'un arbre ( 8 ), un indicateur ( 9 ) de la position du rotor se trouvant à un bout de l'arbre et des capteurs ( 10 ) sans contact étant disposés autour du rotor ( 6 ), détectant la température de la surface du rotor ( 6 ) et ensemble, avec l'indicateur ( 9 ) de la position du rotor et à l'aide d'une unité ( 13 ) de traitement, produisant une reproduction en température du rotor ( 6 ), qui est précise en position, les capteurs ( 10 ) de température repérant sur les faces frontales du rotor ( 6 ) et/ou sur l'étendue axiale du stator ( 2 ) la température du rotor ( 6 ) ou des éléments se trouvant sur le rotor ( 6 ), comme des aimants permanents et une cage de court-circuit.

2. Machine ( 1 ) dynamoélectrique suivant la revendication 1, **caractérisée en ce que** les capteurs ( 10 ) sont disposés en face du côté frontal du rotor ( 6 ) et/ou sur le stator ( 2 ).

3. Machine ( 1 ) dynamoélectrique suivant la revendication 2, **caractérisée en ce que** les capteurs ( 10 ) sont disposés sur le stator ( 2 ), au moins sur une rangée de dents s'étendant axialement vers le jeu.

4. Machine ( 1 ) dynamoélectrique suivant la revendication 2 ou 3, **caractérisée en ce que** les capteurs ( 10 ) sont disposés en face des côtés frontaux du rotor ( 6 ), notamment sous la forme de capteurs en ligne.

5. Machine ( 1 ) dynamoélectrique suivant l'une des revendications précédentes, **caractérisée en ce que** la température de la surface du rotor ( 6 ) est repérée par un système de mesure par infrarouge.

6. Machine ( 1 ) dynamoélectrique suivant l'une des revendications précédentes, **caractérisée en ce que** les données des capteurs ( 10 ) sont acheminées à une unité ( 10 ) de traitement et produisent, ensemble avec l'indicateur ( 9 ) de position du rotor, une reproduction de la température du rotor ( 6 ) précise en position, de sorte que, indépendamment de cela, un ventilateur est commandé et/ou un message est émis et/ou un arrêt de la machine est lancé.

7. Procédé de production d'une reproduction en température du rotor ( 6 ) précise en position d'une maximale dynamoélectrique par les stades suivants :
- on se procure un stator ( 2 ),
- on se procure un arbre ( 8 ) qui est solidaire en rotation du rotor ( 6 ),
- on dispose d'un indicateur ( 9 ) de position du rotor à un bout de l'arbre,
- on dispose les capteurs ( 10 ) de température sans contact autour du rotor ( 6 ),
- on repère la température sur le côté frontal du rotor ( 6 ) et/ou sur l'étendue axiale d'une rangée de dents du stator ( 2 ) tournée vers le jeu,
- on détecte la position du rotor par l'indicateur ( 9 ) de position du rotor,
- on convoie les données à une unité ( 13 ) de traitement, qui produit une reproduction en température du rotor ( 6 ) précise en position et formant la base pour des décisions de l'unité de commande sur le point de savoir si, par exemple, on émet un message et/ou si on provoque un arrêt de la machine.
